(19) Europäisches Patentamt / European Patent Office / Office européen des brevets

(11) **EP 3 587 848 B1**

(12) **EUROPEAN PATENT SPECIFICATION**

(45) Date of publication and mention
of the grant of the patent:
**10.11.2021   Bulletin 2021/45**

(51) Int Cl.:
**F16D 23/14** *(2006.01)*          **F16D 25/08** *(2006.01)*

(21) Application number: **19182485.3**

(22) Date of filing: **26.06.2019**

(54) **CENTRAL RELEASE UNIT FOR A CLUTCH ACTUATION**

ZENTRALE AUSLÖSEEINHEIT FÜR EINE KUPPLUNGSBETÄTIGUNG

UNITÉ DE LIBÉRATION CENTRALE POUR UN ACTIONNEMENT D'EMBRAYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2018   DE 102018005150**

(43) Date of publication of application:
**01.01.2020   Bulletin 2020/01**

(73) Proprietor: **FTE automotive GmbH
96106 Ebern (DE)**

(72) Inventors:
• **BAIERSDORFER, Daniel
96106 Ebern (DE)**
• **GEORGE, Hans-Joachim
96106 Ebern (DE)**

(74) Representative: **Valeo Powertrain Systems
Service Propriété Intellectuelle
14, avenue des Béguines
95800 Cergy St Christophe (FR)**

(56) References cited:
**WO-A1-90/04116          WO-A1-2007/041990
DE-A1-102009 018 794     DE-A1-102013 203 016
DE-A1-102016 219 592**

## Description

TECHNICAL FIELD

The present invention relates to a central release unit for a clutch actuation according to the preamble of claim 1. In particular, the invention relates to a central release unit of a hydraulic clutch actuation for a motor vehicle friction clutch, as used in large numbers in the automotive industry.

PRIOR ART

A hydraulic clutch actuation for motor vehicles usually has a master cylinder which is connected to an expansion reservoir filled with hydraulic fluid and can be actuated e.g. manually via a clutch pedal or automatically via an actuator unit. The master cylinder is hydraulically connected to a slave cylinder via a pressure line, so that the pressure created by depression of the clutch pedal or an actuation movement of the actuator unit in the master cylinder can be transmitted to the slave cylinder via the fluid column in the pressure line. As a result, a release bearing at the friction clutch is loaded with an actuation force by the slave cylinder, in order to separate the clutch pressure plate from the clutch drive plate via a release mechanism, and hence separate the engine from the transmission of the motor vehicle.

To guarantee as even as possible an actuation of the friction clutch with a minimum possible space requirement for the slave cylinder, it has been known for a long time to form the slave cylinder as a ring cylinder which is arranged around the clutch or transmission shaft and preferably attached to the gearbox casing. An annular piston, also called a sliding sleeve, is arranged in the ring cylinder so as to be displaceable in the axial direction of the clutch or transmission shaft, and carries or is actively connected with the release bearing of the friction clutch. When the ring cylinder is hydraulically loaded via the pressure line, the annular piston acts via the release bearing on a clutch spring arrangement of the friction clutch - normally comprising a diaphragm or cup spring - in order to release this. Such slave cylinders are also known as central release units because of their concentric arrangement relative to the clutch or transmission shaft.

Modern central release units have a cylinder housing made mainly from plastic or a light metal alloy for cost and weight reasons, and have at least one outer cylinder wall radially outwardly delimiting an annular pressure chamber; this chamber can be pressurized via a pressure port and houses the displaceable annular piston which is actively connected to the clutch via the release bearing. In some cases, the integrally designed cylinder housing made of plastic also has an inner cylinder wall which delimits the pressure chamber radially inwardly and guides the annular piston; in other cases, a guide sleeve - normally deep-drawn from sheet steel - is arranged concentrically inside the outer cylinder wall and attached to the cylinder housing in order to delimit the pressure chamber radially inwardly and guide the annular piston.

In a previously known design for a central release unit (see e.g. publication EP 1 464 862 A2), the release bearing is rigidly coupled via a sheet metal supporting ring to the annular piston which is guided on a guide face formed by the inner cylinder wall or guide sleeve. In fitted state of the central release unit, the release bearing bears on the diaphragm or cup spring of the clutch under spring preload. In operation, because e.g. of a production-related backlash of the clutch spring or an eccentric arrangement relative to the clutch spring, the release bearing can be loaded with an axial runout which tries to force the release bearing into a tumbling motion. Because of the rigid connection of the release bearing on the annular piston, the latter is therefore loaded with a tilt moment circulating on the clutch with the rotation speed, which must be borne by the guide face on the inner cylinder wall or guide sleeve. The radially inner edge of the annular piston facing the clutch may thereby be pressed against the guide face so strongly that the edge of the annular piston cuts into this region of the guide face, i.e. wear on the guide face occurs here, which is visible in the form of a peripheral contact track. This wear should be avoided.

In this context, publication DE 199 12 432 A1 discloses a release bearing for a clutch with a bearing ring arranged rotationally fixedly on a sliding sleeve, a bearing ring rotating relative thereto and lying against a cup spring of the clutch, and roller bodies provided between the bearing rings, wherein the rotating bearing ring has two regions with complementary ball-surface segments which can slide on each other and pivot relative to each other. By dividing the rotating bearing ring into two parts in this way, the previously known release bearing is able to compensate for an axially parallel offset of the force-transmitting shafts and for a backlash of the cup spring tongues, so that such forces are not transmitted to the bearing ring on the sliding sleeve side.

As well as the relatively complex structure of the previously known release bearing, a disadvantage of this prior art is that the individual parts of the rotating bearing ring in the region of the axial force transmission undergo a sliding movement relative to each other while in mutual contact, which indicates that a relatively high wear is to be expected at this point.

The same applies to the concepts known from publications DE 101 14 844 A1 and DE 10 2013 203 016 A1 for self-adjusting clutch release bearings, in which dome-shaped contact faces between the release bearing inner ring and supporting ring, or rounded or ball-like contours between the supporting ring and annular piston, can slide on each other in the region of axial force transmission.

Publication DE 10 2009 018 794 A1 which forms the preamble to claim 1 finally discloses a central release unit for a clutch actuation, in which the release bearing is connected to the sliding sleeve by means of a bearing connection which surrounds one end of the sliding sleeve. This bearing connection has at least one spring tab which engages in a depression formed on the sliding sleeve, and serves to connect the bearing connection to the sliding sleeve without play. In particular, this guarantees a final installation position without play in the axial direction between the sliding sleeve and the bearing connection, which also compensates for production tolerances and ensures that an annular region of the bearing connection receiving the release bearing always bears firmly on an end face of the sliding sleeve. This reduces but does not completely avoid wear between the bearing connection and the sliding sleeve, which results in the prior art from permanent relative movements between the bearing connection and the sliding sleeve.

In the prior art, the bearing connection comprises a ring region with a U-shaped cross-section which is open towards the radial outside, and in which the inner ring of the release bearing is held by means of a spring (radial displacement force spring) in order to guarantee a contact of the inner ring on the bearing connection which allows movement in the radial direction. Any tumbling motions of the release bearing are thus transmitted to the sliding sleeve because of the play-free connection of the bearing connection to the sliding sleeve, so that the problem outlined initially exists here too, wherein the edge of the sliding sleeve can cut into the guide face for the sliding sleeve. A further example of a central release unit for a clutch actuation is disclosed in DE 10 2016 219592 A1.

OBJECT OF THE INVENTION

The invention is based on the object of creating a central release unit for clutch actuation which is configured as simply as possible, avoids the above disadvantages and is optimized relative to the outlined prior art, in particular in relation to operation with minimized wear.

DESCRIPTION OF THE INVENTION

This object is achieved by a central release unit for clutch actuation with the features of claim 1. Advantageous embodiments of the invention are the subject of the subclaims. A central release unit for a clutch actuation comprises a cylinder housing which delimits an annular pressure chamber about a central axis; wherein an annular piston, which can be actively connected to a clutch via a release bearing, is guided displaceably along the central axis in said pressure chamber; wherein the release bearing is connected to the annular piston by means of a supporting ring, a sleeve portion of which having a plurality of spring tabs surrounds an end portion of the annular piston; wherein a free end of each of said spring tabs is configured to engage in sprung fashion in an assigned depression in the end portion of the annular piston, and said tabs are adapted to bring a contact face of the supporting ring to bear against an end face on the end portion of the annular piston; wherein according to the invention, an outer diameter of the end portion is smaller than an inner diameter of the sleeve portion, so that a defined radial play exists between the supporting ring and the annular piston, allowing a tumbling motion of the contact face of the supporting ring on the end face of the annular piston, about the central axis; wherein for the sprung engagement of the spring tabs, the depression of the annular piston comprises a ramp region with a gradient relative to the central axis such that, during said tumbling motion, the spring tabs may slide on the ramp region along the central axis without self-inhibition and hence apply a return force on the supporting ring, countering the tumbling motion.

The spring tabs, lying with a specific preload against the ramp region of the annular piston which has a defined gradient, always create on the supporting ring a resulting force which has an axial force component oriented parallel to the central axis. This force component aims to draw the contact face of supporting ring against the end face of the annular piston. Without external forces via the release bearing, in cooperation with the ramp region - the gradient of which prevents a self-inhibition in the region of contact with the spring tabs, and thereby in some cases allows sliding of the spring tabs on the ramp region - the spring tabs achieve a superficial contact between the contact face of the supporting ring and the end face of the annular piston. Due to the axial contact between the annular piston and the supporting ring which can therefore be achieved in the rest position and in operation, i.e. the absence of axial play in the connection, advantageously, idle travels are avoided during actuation of the clutch by means of the central release unit, i.e. during the actual release and engagement process.

However, a complete absence of play in the connection between the annular piston and supporting ring is expressly undesirable. Rather, according to the invention, a defined radial play is provided between the supporting ring and the annular piston, which allows a tilting of the supporting ring relative to the annular piston. This tiltability of the supporting ring relative to the central axis - in combination with the return force on the supporting ring, which acts along the central axis and is produced by the elastic engagement of the spring tabs on the ramp region of the annular piston - leads to the release bearing, which is held on the annular piston by means of the supporting ring, being able to execute a relatively free tumbling motion relative to the annular piston. If a tumbling motion is imposed on the release bearing in operation of the central release unit, as described initially, in contrast to the generic prior art, the supporting ring follows this tumbling motion relative to the annular piston, which leads to permanent relative movements between the supporting ring and the annular piston.

The release bearing, which is held in a particular fashion on the annular piston by means of the supporting ring, can therefore tumble relatively freely in relation to the annular piston without transmitting a circulating tilt moment to the annular piston. Thus the wear between the annular piston and its guide face of the cylinder housing, described initially and visible in the prior art as a peripheral contact track, is reliably avoided.

Because of the connection according to the invention of the supporting ring to the annular piston, therefore no excessive wear occurs between the supporting ring and the annular piston, although permanent relative movements are permitted here. This is because no axial force is transmitted in the region of the sliding contact between the spring tabs of the supporting ring and the ramp region of the annular piston. The axial force transmission between the supporting ring and the annular piston rather takes place in the contact region between the contact face of the supporting ring and the end face of the annular piston. During the tumbling motion of the supporting ring following that of the release bearing, this contact region between the supporting ring and annular piston however substantially circulates only between these faces, i.e. the contact face of the supporting ring tumbles on the end face of the annular piston without the occurrence of a wear-relevant, sliding relative movement between these faces in this circulating contact region.

In other words, a basic concept of the invention is that the connection of the release bearing to the annular piston is achieved by means of the supporting ring, such that tumbling motions of the release bearing are permitted with as little hindrance as possible, and the necessarily occurring, sliding relative movements between the supporting ring and annular piston however take place in a region at which no axial force is transmitted. This separation of the locations of axial force transmission and sliding relative movement between the supporting ring and annular piston substantially reduces the wear.

In principle, the ramp region on the annular piston may have a gradient which varies along the central axis, as long as it is ensured that the spring tabs can slide on the ramp region without self-inhibition during the possible tumbling motion, and because of the sprung contact of the spring tabs on the ramp region, a force results which aims to draw the supporting ring against the annular piston. A changing gradient in the ramp region could for example exert influence on the return force, such that greater deflection of the supporting ring relative to the annular piston leads to a tendentially even greater return force. In particular with a view to a clearly defined and substantially linear rise in return force over the deflection of the supporting ring relative to the annular piston, an embodiment is preferred in which the gradient of the ramp region on the annular piston is constant with a fixed ramp angle $\alpha$ relative to the central axis.

In order to reliably guarantee here an autonomous sliding motion of the spring tabs of the supporting ring in the direction of the pressure chamber on the ramp region of the annular piston without further measures, the embodiment is suitably designed such that the gradient $\alpha$ of the ramp region fulfils the following equation:

$$\tan \alpha > \mu_R$$

wherein $\mu_R$ is the coefficient of friction between the spring tabs of the supporting ring and the ramp region of the annular piston.

In experiments performed by the inventors, it has proved particularly suitable if the ramp angle $\alpha$ of the ramp region on the annular piston relative to the central axis is greater than or equal to 10° and less than or equal to 15°. Depending on the respective material pairings and/or lubrication conditions, flatter or steeper ramp angles are however also conceivable. Furthermore, spring rates between 75 and 90 N/mm per spring tab have proved practicable. The preload travel of the respective spring tab on the ramp region may, in one practical embodiment, amount for example to 0.5 mm when the supporting ring is in its centred "rest position" relative to the central axis, i.e. with its contact face bearing superficially on the end face of the annular piston. In one configuration of the supporting ring made of spring steel, with a wall thickness of 0.5 mm and a lever length of approximately 4 to 5 mm per spring tab, this corresponds for example to a maximal force of 45 N per spring tab.

With regard to a further dimensioning of the parts concerned which is desirable for the interplay of the supporting ring and annular piston according to the invention, it is provided, according to the invention, that the radial play between the supporting ring and the annular piston, and an axial length of the sleeve portion of the supporting ring surrounding the end portion of the annular piston, are matched to each other such that during the tumbling motion, the supporting ring mounted on the annular piston can be tilted by a tilt angle $\beta$ of maximum 2° relative to the central axis. Experiments performed by the inventors have shown here that, with such a dimensioning, the tumbling motion imposed on the release bearing - normally because of production-induced backlash of the clutch spring or an eccentric arrangement relative to the clutch spring - does not allow the end of the supporting ring facing the pressure chamber to come to bear on the annular piston in the radial direction. Any abrasion or wear on the annular piston connected with such a contact is thus advantageously avoided. Also, in a simple fashion, this ensures that during the tumbling motion of the release bearing, the contact face of the supporting ring remains in the above-mentioned circulating axial contact with the end face of the annular piston and does not lift away from the end face of the annular piston because of a radial "levering" of the supporting ring.

The number of spring tabs on the supporting ring is in particular dependent on the return force to be applied in order, in a resting system, to automatically draw the contact face of the supporting ring against the end face on the end portion of the annular piston. With relatively large dimensions of a central release unit, the number may be significantly higher than ten. For normal motor vehicle applications, it is considered suitable if the supporting ring has at least three and at most nine spring tabs. Provision of at least three spring tabs is advantageous, in particular with regard to an inherently stable connection of the supporting ring on the annular piston. In the case of nine spring tabs for example, the production complexity for manufacturing the supporting ring is relatively high; also, each spring tab not absolutely essential for function also leads to an undesirable weakening of the supporting ring structure. In a particularly preferred embodiment, the supporting ring therefore has six spring tabs.

Furthermore, in particular with regard to a self-centring orientation of the supporting ring on the annular piston, it is advantageous if, in a preferred embodiment of the central release unit, the spring tabs are evenly distributed over the periphery of the supporting ring. Here, the individual spring tabs may for example be evenly angularly spaced from each other about the central axis. It is however also conceivable that several groups of spring tabs, lying closely next to each other on the periphery of the supporting ring, are distributed evenly over the periphery of the supporting ring with greater angular distances between the groups.

In order to provide an additional protection against loss for the release bearing, in particular during transport and/or installation of the central release unit at the final installation site, in a preferred embodiment of the central release unit, furthermore the end portion of the annular piston may have a radially outwardly protruding collar which forms a stop for the spring tabs of the supporting ring. Instead of this optional collar however, at the end portion of the annular piston, a peripheral groove may also be provided which can catch the spring tabs of the supporting ring when the release bearing is extracted, or a locking ring such as e.g. a circlip, a retaining ring or similar, which is held in a peripheral groove on the end portion of the annular piston and protrudes beyond this in the radial direction in order to form a stop face for the spring tabs.

Preferably, furthermore, the sleeve portion of the supporting ring is rounded on the inner periphery at its end facing the pressure chamber. This optional measure also serves to minimize wear or avoid damage to the annular piston, in particular during transport or installation of the central release unit at the final installation site, because even on maximal tilting of the release bearing relative to the annular piston, the sharp edge of the supporting ring cannot come to bear on the annular piston.

There are also several possibilities for the formation of the ramp region on the annular piston for engagement of the spring tabs of the supporting ring. Thus the ramp region may comprise a plurality of ramp portions in a corresponding number of depression portions in the annular piston, to each of which a spring tab is assigned.

It is also conceivable to provide a peripheral depression in the end portion of the annular piston having a plurality of flat individual faces which are set at a ramp angle relative to the central axis for engagement of the spring tabs, and together form a ramp region of the annular piston which, viewed in cross-section, has e.g. a polygonal form. In particular with a view to maximum simplicity of production and avoidance of additional forces in operation, an embodiment is however preferred in which the ramp region is formed by a peripheral, conical face of the annular piston. With such an embodiment of the ramp region, advantageously there is no need for security against twisting of the respective components relative to each other, nor for installation in a specific direction or oriented by rotary angle.

In principle, there are two alternatives for the orientation of the spring tabs of the supporting ring which run substantially along the central axis: in a first alternative, the free ends of the spring tabs face away from the pressure chamber, or in a second alternative the free ends of the spring tabs face towards the pressure chamber. One particular advantage of the first alternative is that a supporting ring configured in this fashion is easier to mount on the annular piston because, during installation, the spring tabs form a virtually stepless axial joining chamfer. The second alternative however is advantageous in that a supporting ring configured in this fashion may be produced more easily because, during production or bending of the spring tabs, their connection to the rest of the supporting ring is situated in a region close to the contact face of the supporting ring in which the supporting ring is more stable or stiffer.

With regard to the free ends of the spring tabs of the supporting ring, these may for example be straight and at their ends have a chamfered face for contact with the ramp region of the annular piston. In contrast, with a view in particular to keeping the contact face as small as possible and achieving the greatest ease of movement between the spring tabs of the supporting ring and the ramp region of the annular piston and also low wear on the ramp region, a configuration is however preferred in which the free ends of the spring tabs are bent away from the annular piston over a curved region, and the curved regions bear against the ramp region of the annular piston.

In principle, finally the cylinder housing and/or the annular piston may be made from a light metal alloy. In particular, with a view to low weight and mass production which is as cheap as possible, in particular avoiding material removal, it is however preferred if the cylinder housing and/or the annular piston are/is made from a plastic, so that advantageously, production by injection moulding is possible. Such an embodiment made of plastic is particularly beneficial for minimising wear according to the invention.

BRIEF DESCRIPTION OF THE DRAWINGS

The invention is now explained in more detail below with reference to preferred exemplary embodiments and with reference to the attached, partially diagrammatic drawings. The drawings show:

Figure 1    a central release unit according to a first exemplary embodiment of the invention in the non-fitted state, in a top view which is cut away in the region of a pressure port connection provided on the cylinder housing of the central release unit;

Figure 2    a sectional view of the central release unit from figure 1, following the section line II-II in figure 1,

Figure 3    a sectional view, cut away at the top and bottom and enlarged in scale in comparison with figure 2, of the central release unit according to figure 1, following the section line II-II in figure 1, in particular to illustrate how, for tumbling, a release bearing of the central release unit is attached by means of a supporting ring on an annular piston housed in a cylinder housing so as to be displaceable along a central axis;

Figure 4    a depiction, further enlarged in scale in comparison with figure 3, of detail IV in figure 2 to illustrate further details of the tumbling connection of the release bearing to the annular piston of the central release unit from figure 1, with spring tabs on the

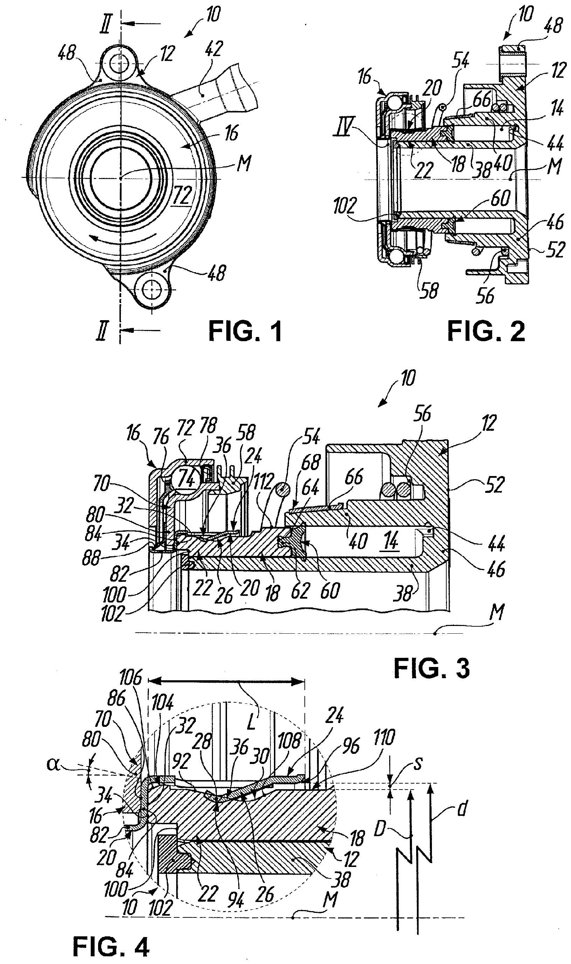

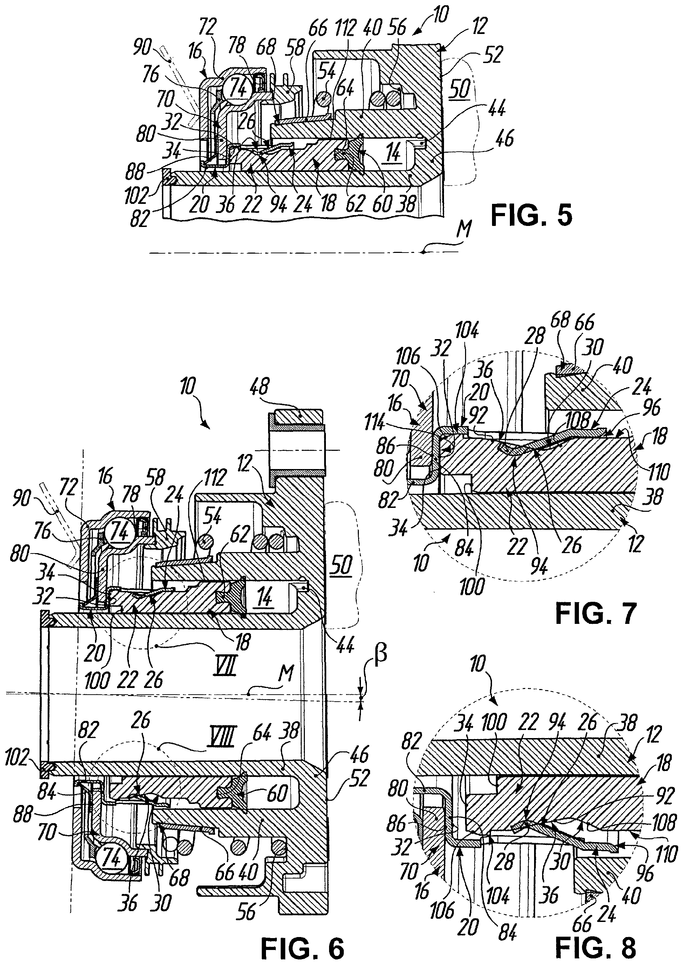

Figure 5    supporting ring which bear in sprung fashion on an assigned ramp region of the annular piston; a cut-away sectional view, which corresponds in scale, depiction and section line to figure 3, of the central release unit from figure 1 in the fitted but unactuated state, showing in dotted lines and cut away, on the left-hand side in figure 5 a spring tongue of a diaphragm spring on a friction coupling to be actuated by means of the central release unit, and on the right-hand side in figure 5 a fixing flange on a gearbox casing, in order to illustrate an installation situation for the central release unit;

Figure 6    a sectional view, which is not cut away and corresponds in scale, depiction and section line to figure 5, of the central release unit from figure 1, to illustrate how the release bearing can tumble relative to the annular piston because of the tumbling connection of the release bearing via the supporting ring;

Figure 7    a depiction, again enlarged in scale in comparison with figure 6, of detail VII from figure 6 showing where, in the central release unit from figure 1, during a tumbling motion of the release bearing and at maximum tilt of the release bearing relative to the central axis, the supporting ring can make circulating contact with the annular piston;

Figure 8    a depiction, again enlarged in scale in comparison with figure 6, of detail VIII of figure 6 which, in contrast to figure 7, illustrates where, in the central release unit from figure 1, during a tumbling motion of the release bearing and at maximum tilt of

Figure 9    the release bearing relative to the central axis, the supporting ring can lift peripherally away from the annular piston; a perspective view of just the supporting ring of the central release unit from figure 1 from obliquely above/rear left;

Figure 10    a perspective view of just the supporting ring of the central release unit from figure 1 from obliquely above/front left;

Figure 11    a longitudinal sectional view, enlarged in scale in comparison with figures 9 and 10, of just the supporting ring of the central release unit from figure 1;

Figure 12    a perspective view of just the annular piston of the central release unit from figure 1 without sealing sleeve, from obliquely above/rear left;

Figure 13    a perspective view of just the annular piston of the central release unit from figure 1 without sealing sleeve, from obliquely above/front left;

Figure 14    a side view, enlarged in scale in comparison with figures 12 and 13, of just the annular piston of the central release unit from figure 1 without sealing sleeve;

Figure 15    a longitudinal sectional view of just the annular piston of the central release unit from figure 1 without sealing sleeve, in the scale of figure 14;

Figure 16    a central release unit according to a second exemplary embodiment of the invention in non-fitted state, in a top view which is again cut away in the region of the pressure port connection provided on the cylinder housing of the central release unit;

Figure 17    a sectional view of the central release unit from figure 16 following the section line XVII-XVII in figure 16;

Figure 18    a sectional view, enlarged in scale in comparison with figure 17 and cut away at the top and bottom, of the central release unit from figure 16, following the section line XVII-XVII in figure 16, in particular to illustrate how the release bearing of the central release unit, for tumbling, is arranged by means of a differently configured supporting ring on the annular piston which is housed in displaceable fashion in the cylinder housing;

Figure 19    a depiction, again enlarged in scale in comparison with figure 18, of detail XIX from figure 17, to illustrate further details of the tumbling-robust connection of the release bearing to the annular piston of the central release unit from figure 16, with spring tabs on the supporting ring oriented differently and bearing in sprung fashion on the assigned ramp region of the annular piston;

Figure 20    a cut-away sectional view, which corresponds in scale, depiction and section line to figure 18, of the central release unit from figure 16 in the fitted but unactuated state, wherein again a spring tongue of the diaphragm spring of the friction clutch and the fixing flange of the gearbox casing are indicated

Figure 21    with dotted lines and cut-away, corresponding to figures 5 and 6 showing the first exemplary embodiment; a perspective view of just the supporting ring of the central release unit from figure 16, from obliquely above/rear left;

Figure 22    a perspective view of just the supporting ring of the central release unit from figure 16, from obliquely above/front left; and

Figure 23    a longitudinal sectional view, of enlarged scale in comparison with figures 21 and 22, of just the supporting ring of the central release unit from figure 16.

In the drawings, elastic or elastomer components, namely the spring tabs of the supporting ring and the sealing sleeve on the annular piston, are shown in the non-deformed state for simplicity of depiction; in reality, these deformable components bear on adjacent faces of neighbouring components.

DETAILED DESCRIPTION OF EXEMPLARY EMBODIMENTS

In figures 1 to 8, reference sign 10 generally designates a central release unit for a hydraulic clutch actuation. The central release unit 10 has a cylinder housing 12 which delimits an annular pressure chamber 14 about a central axis M. An annular piston 18, which can be actively connected to a friction clutch via a release bearing 16, is guided in the pressure chamber 14 so as to be displaceable along the central axis M. The release bearing 16 is connected to the annular piston 18 by means of a supporting ring 20, a sleeve portion 24 of which surrounds an end portion 22 of the annular piston 18.

The sleeve portion 24 of the supporting ring 20 has a plurality of spring tabs 26, a free end 28 of each of which, in particular as shown in figures 4, 7 and 8, engages in sprung fashion in an assigned depression 30 in the end portion 22 of the annular piston 18. The spring tabs 26 are adapted to bring a contact face 32 of the supporting ring 20 to bear against an end face 34 on the end portion 22 of the annular piston 18.

As will be described in more detail below, the supporting ring 20 creates a tumbling connection of the release bearing 16 to the annular piston 18 of the central release unit 10. In particular according to figure 4, an outer diameter D of the end portion 22 of the annular piston 18 is smaller than an inner diameter d of the sleeve portion 24 of the supporting ring 20, so that a defined radial play s exists between the supporting ring 20 and the annular piston 18. This radial play s allows a tumbling motion of the contact face 32 of the supporting ring 20 on the end face 34 of the annular piston 18 about the central axis M. The depression 30 of the annular piston 18 furthermore comprises a ramp region 36 for the sprung engagement of the spring tabs 26 of the supporting ring 20, which region has a gradient relative to the central axis M such that during said tumbling motion, the spring tabs 26 can slide on the ramp region 36 along the central axis M without self-inhibition and hence apply a return force to the supporting ring 20, countering the tumbling motion.

In the exemplary embodiment shown, the central release unit 10 has a cylinder housing 12 which is injection-moulded from a suitable plastic e.g. a glass-fibre-filled polyphthalamide (PPA), with two concentrically arranged cylinder walls, namely an inner cylinder wall 38 and an outer cylinder wall 40 which radially delimit the annular pressure chamber 14. The annular piston 18, which is received in axially displaceable fashion in the pressure chamber 14 and which, in the exemplary embodiment shown, is also made of a suitable plastic, such as a polyphthalamide (PPA) with a predefined glass-fibre content of e.g. 50%, can optionally be loaded with a pressure medium via a pressure port connection 42 (figure 1) of the cylinder housing 12 in order to actuate the friction clutch by axial displacement of the annular piston 18. To this end, the pressure port connection 42 is connected to the pressure chamber 14 via a channel 44 moulded into the cylinder housing 12 (not shown in detail in the figures), so that the pressure medium, namely hydraulic fluid, can be supplied to the pressure chamber 14 via the channel 44.

The cylinder walls 38 and 40 which are arranged concentrically relative to the central axis M and to each other, are connected together via a flange portion 46 at their ends shown on the right in figures 2, 3, 5 and 6. The outer periphery of the flange portion 46 is provided with fixing eyes 48 which are angularly spaced apart and reinforced with metal in the exemplary embodiment shown, and in the motor vehicle serve in the known fashion for fixing the central release unit 10 to a gearbox wall (indicated with dotted lines 50 in figures 5 and 6) or to a gearbox cover by means of bolts for example (not shown) which pass through the fixing eyes 48 and draw the central release unit 10 with an end side 52 of the cylinder housing 12 against the gearbox wall 50 or gearbox cover. The cylinder housing 12, with the pressure port connection 42 adjoining the flange portion 46, its cylinder walls 38 and 40 and the flange portion 46 connecting these and containing the fixing eyes 48, is integrally injection-moulded from plastic in the exemplary embodiment shown.

The outer cylinder wall 40 is surrounded by a preload spring 54, which in the exemplary embodiment shown is a cylindrical coil compression spring. At its right-hand end in figures 2, 3, 5 and 6, the preload spring 54 rests in an axial groove 56 formed in the flange portion 46 of the cylinder housing 12. At its left-hand end in figures 2, 3, 5 and 6, the preload spring 54 exerts a defined preload force on the release bearing 16 via an annular spring plate 58. As mentioned initially, the release bearing 16 is held on the end portion 22 of the annular piston 18, which faces away from the pressure chamber 14 and is shown on the left in figures 2, 3, 5 and 6, by means of the supporting ring 20, so that on pressurization of the annular pressure chamber 14, the release bearing 16 can move in the axial direction, i.e. horizontally in the above-mentioned figures, in order to release or engage the friction clutch in the known fashion.

At the right-hand end of the annular piston 18 shown in figures 2, 3, 5 and 6 - which, in the basic position of the central release unit 10 shown in figures 2 and 3, still overlaps in the axial direction with the outer cylinder wall 40 of the cylinder housing 12 - a dynamic seal in the form of an elastomer sealing sleeve 60 is suitably arranged, here engaging with a sealing sleeve foot 62 in an axial groove 64 with circumferential undercut on the end face of the annular piston 18. The sealing seat 60, shown for simplicity of depiction in undeformed state, lies tightly against both the inner cylinder wall 38 of the cylinder housing 12 and the outer cylinder wall 40 of the cylinder housing 12, in order to seal the pressure chamber 14 to the left in relation to figures 2, 3, 5 and 6.

The outer periphery of the outer cylinder wall 14 is provided with a metallic reinforcing sleeve 66, which is attached to the outer cylinder wall 40 by means of a snap-lock connection 68 provided at the end of the reinforcing sleeve 66 facing away from the pressure port connection 42. The reinforcing sleeve 66 is arranged in a region of the outer cylinder wall 40 which has a relatively thin wall thickness and must be supported against the pressure in the pressure chamber 14 in order to avoid harmful structural changes to the plastic.

The release bearing 16 arranged on the side of the annular piston 18 facing away from the pressure chamber 14 comprises, in a known fashion, an inner ring 70, an outer ring 72 and a plurality of roller bodies 74, which are held in a cage 76 between the inner ring 70 and outer ring 72 and protected by means of a sealing disc 78. The inner ring 70 of the release bearing 16 is attached to the supporting ring 20 via an annular fixing portion 80 of the inner ring 70 running transversely to the central axis M.

For this, in particular according to figures 3, 5 and 6, the supporting ring 20, viewed in cross-section, has a substantially U-shaped ring portion 82 which is open radially towards the outside and via which a shoulder portion 84, running transversely to the central axis M, is connected to the sleeve portion 24 of larger diameter of the supporting ring 20. The shoulder portion 84 of the supporting ring 20, with its side facing the annular piston 18, forms the contact face 32 for the end face 34 of the annular piston 18.

On the opposite side, the shoulder portion 84 of the supporting ring 20, in particular according to figures 4, 7 and 8, defines a further contact face 84 for the fixing portion 80 of the inner ring 70. Furthermore, a cup spring 84 (or angular spring element) is received on the ring portion 82 of the supporting ring 20 and rests in a corner region of the U-shaped cross-section, pressing the fixing portion 80 of the inner ring 70 against the contact face 86 of the shoulder portion 84 of the supporting ring 20, so that the inner ring 70 of the release bearing 16 is held fixedly in the axial direction on the supporting ring 20.

Figures 3 to 8 also clearly show that at the inner ring 70 of the release bearing 16, an inner diameter of the fixing portion 80 is larger than an outer diameter of the ring portion 82 of the supporting ring 20, so that here a certain radial play exists between the release bearing 16 and the supporting ring 20, so as to allow a radial movement of the release bearing 16 relative to the supporting ring 20. This serves to compensate for any axial offset between the central release unit 10 attached to the gearbox wall 50 and a diaphragm spring of the friction clutch to be actuated by means of the central release unit 10, of which figures 5 and 6 indicate in dotted lines a spring tongue carrying reference sign 90, and which in fitted state of the central release unit 10 bears with its spring tongues 90 on the outer ring 72 of the release bearing 16.

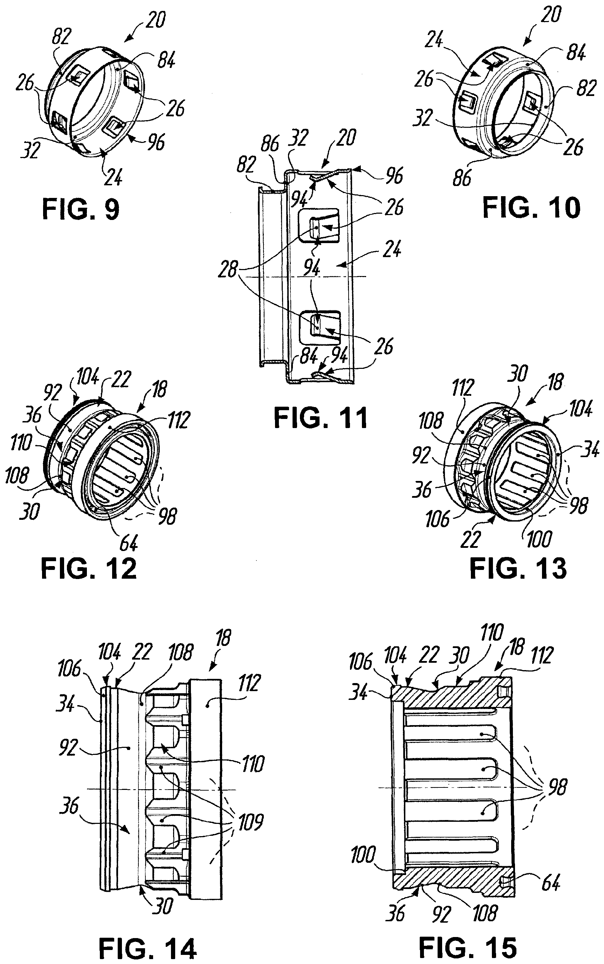

Further details of the sleeve portion 24 of the supporting ring 20 are shown in particular in figures 9 to 11. Accordingly, in the exemplary embodiment shown, the supporting ring 20 has a total of six spring tabs 26 in a region of the sleeve portion 24 in the middle in the axial direction. The spring tabs 26 are evenly distributed over the periphery of the supporting ring 20 and are produced or bent radially inwardly from the base material of the supporting ring 20.

In this exemplary embodiment, when the supporting ring 20 is mounted on the annular piston 18, the free ends 28 of the spring tabs 26 extending along the central axis M face away from the pressure chamber 14, i.e. point in the direction of the shoulder portion 84 of the supporting ring 20. The free ends 28 of the spring tabs 26 are furthermore bent radially inwardly so far that, when the supporting ring 20 is mounted on the annular piston 18, they bear in sprung fashion in the depression 30 of the annular piston 18 on the ramp region 36, which in the exemplary embodiment shown is formed by a peripheral conical face 92 of the annular piston 18. More precisely, at their free ends 28, the spring tabs 26 are bent away from the annular piston 18 via a curved region 94, and with the curved region 94 bear on the ramp region 36 of the annular piston 18 in slidable fashion.

As best illustrated by figures 4, 7, 8 and 11, the sleeve portion 24 of the supporting ring 20, at its end facing the pressure chamber 14 in mounted state of the release bearing 16, is provided with a circumferential rounded region on its inner periphery, marked with reference sign 96. Thus a sharp terminating edge of the sleeve portion 24 cannot come into contact with the annular piston 18 even on maximal tilt of the supporting ring 20 relative to the annular piston 18, as shown in figure 7.

Further details of the annular piston 18 are shown in particular in figures 12 to 15. The inner periphery of the annular piston 18, produced by injection moulding in the exemplary embodiment shown, is initially provided with grease pockets 98 extending along the central axis M. Adjacent to the end face 34 for contact with the supporting ring 20, the inner periphery of the annular piston 18 furthermore has a shoulder 100 which, when the annular piston 18 is mounted on the inner cylinder wall 38 of the cylinder housing 12 as shown in figures 2 to 4, forms an annular contact face with which the annular piston 18 can travel against a locking ring 102 which is suitably arranged, e.g. welded, as mounting security on the free end of the inner cylinder wall 38 and protrudes in the radial direction over the outer peripheral face of the inner cylinder wall 38.

As shown in particular in figures 4, 7 and 8, at its end portion 22 adjacent to the end face 34, the outer periphery of the annular piston 18 initially has a radially outwardly protruding collar 104 which is provided with a joining chamfer 106 for the supporting ring 20. The collar 104 acts as additional security against loss of the release bearing 16 and forms a stop for the spring tabs 26 of the supporting ring 20. The collar 104 here has an outer diameter which is slightly smaller than the inner diameter of the sleeve portion 24 of the supporting ring 20, so that a tumbling motion of the supporting ring 20 on the end portion 22 of the annular piston 18 is not obstructed by the collar 104.

After a short, cylindrical transitional region of the annular piston 18 on the right in figures 2 to 8, the collar 104 is adjoined by the depression 30 in the outer peripheral face of the annular piston 18. Viewed from left to right in these figures, the depression 30 begins with the ramp region 36 or conical face 92 and ends after the ramp region 36 with a slightly curved run-out region 108, on which the spring tabs 26 cannot come to bear. The run-out region 108 of the depression 30 is adjoined by an interrupted cylinder face 110 of diameter D, which according in particular to figures 12 to 14 is formed by longitudinal ribs 109 of the annular piston 18. Thereafter, the wall thickness of the annular piston 18 increases in an end region 112 so far that the annular piston 18 can be tightly received in the pressure chamber 14, and sufficient material is provided for stable formation of the axial groove 64 for receiving the sealing sleeve 60.

As shown in particular by figure 4, in the exemplary embodiment shown here, the gradient of the ramp region 36 or conical face 92 of the annular piston 18 is constant with a ramp angle $\alpha$ relative to the central axis M. This gradient is selected so that no self-inhibition can occur between the spring tabs 26 and the ramp region 36, so the tangent of the ramp angle $\alpha$ is greater than the coefficient of friction $\mu_R$ between the spring tabs 26 and the ramp region 36. The ramp angle $\alpha$ is preferably between 10° and 50° relative to the central axis M, and in the example shown is around 12° relative to the central axis M.

As figures 4 and 6 to 8 furthermore show, the radial play s between the supporting ring 20 and annular piston 18, and an axial length L of the sleeve portion 24 of the supporting ring 20, are matched to each other such that during the tumbling motion, the supporting ring 20 mounted on the annular piston 18 may tilt by a tilt angle $\beta$ (see figure 6) of maximum 2° relative to the central axis M. No further tilting of the supporting ring 20 relative to the central axis M is possible, because the rounded portion 96 of the sleeve portion 24 of the supporting ring 20 comes to bear on the interrupted cylinder face 110 of the annular piston 18, as shown at the top right in figure 7. The tumble angle of the release bearing 16 relative to the central axis M is usually smaller however, so that in operation of the central release unit 10, normally no such contact occurs between the rounded portion 96 of the sleeve portion 24 and the annular piston 18.

Figures 7 and 8 also illustrate clearly that, during a tumbling motion imposed on the supporting ring 20 by the release bearing 16, only a small region 114 of the contact face 32 of the supporting ring 20 comes to rest on the end face 34 of the annular piston 18 (see figure 7), whereas a main part of the contact face 32 of the supporting ring 20 lifts away from the end face 34 of the annular piston 18 (see figure 8). During the common tumbling motion of the release bearing 16 and supporting ring 20, this contact region 114 between the contact face 32 of the supporting ring 20 and the end face 34 of the annular piston 18 circulates around the central axis M on the end face 34 of the annular piston 18. In this circulating contact region 114, the axial force transmission takes place between the annular piston 18 and the supporting ring 20 / release bearing 16 without any substantial sliding movement between the contact face 32 of the supporting ring 20 and the end face 34 of the annular piston 18. The return force of the spring tabs 26, which aims to draw the supporting ring 20 against the annular piston 18 and hence counters the tumbling motion with a certain - albeit slight - resistance, here also serves for centring the supporting ring 20 relative to the annular piston 18.

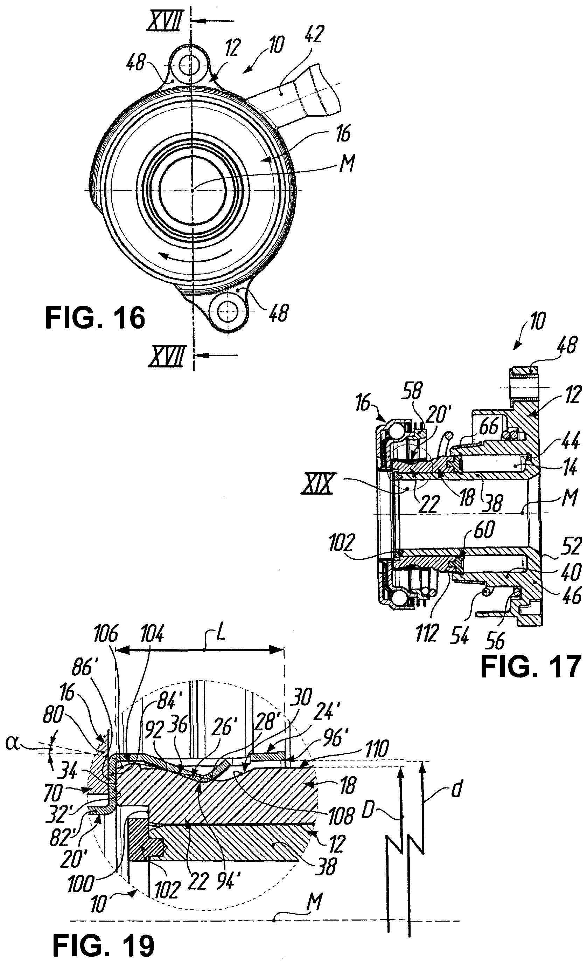

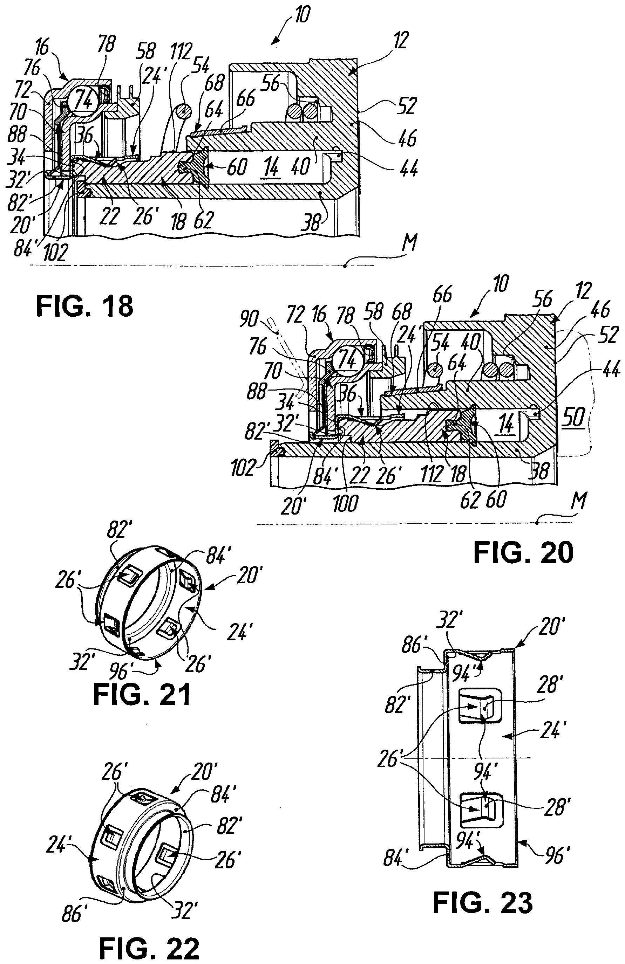

The second exemplary embodiment shown in figures 16 to 23 differs from the first exemplary embodiment, described above with reference to figures 1 to 15, merely in the design of the supporting ring 20'; the respective reference signs of said supporting ring and its constituents therefore carry an apostrophe (') suffix. In contrast to the first exemplary embodiment, in the supporting ring 20' according to the second exemplary embodiment, the free ends 28' of the spring tabs 26' face the pressure chamber 14, i.e. point away from the shoulder portion 84' of the supporting ring 20'. In particular, this simplifies production of the supporting ring 20' because the production or bending of the spring tabs 26' can be counterheld in a more stable fashion. Functionally, there are no differences between the two exemplary embodiments.

A central release unit has a cylinder housing which delimits an annular pressure chamber about a central axis, in which chamber an annular piston is guided in displaceable fashion. A release bearing is held on the annular piston by means of a supporting ring, a sleeve portion of which surrounds an end portion of the annular piston. The sleeve portion has a plurality of spring tabs which engage in sprung fashion in an assigned depression of the annular piston, and draw a contact face of the supporting ring against an end face of the annular piston. A defined radial play exists between the supporting ring and the annular piston, allowing a tumbling motion of the contact face of the supporting ring on the end face of the annular piston. For engagement of the spring tabs, the depression of the annular piston has a ramp region with a gradient (ramp angle) such that, during said tumbling motion, the spring tabs can slide on the ramp region along the central axis without self-inhibition and thereby apply a return force to the supporting ring, countering the tumbling motion.

LIST OF REFERENCE SIGNS

| | |
|---|---|
| 10 | Central release unit |
| 12 | Cylinder housing |
| 14 | Pressure chamber |
| 16 | Release bearing |
| 18 | Annular piston |
| 20, 20' | Supporting ring |
| 22 | End portion |
| 24, 24' | Sleeve portion |
| 26, 26' | Spring tab |
| 28, 28' | Free end |
| 30 | Depression |
| 32, 32' | Contact face |
| 34 | End face |
| 36 | Ramp region |
| 38 | Inner cylinder wall |
| 40 | Outer cylinder wall |
| 42 | Pressure port connection |
| 44 | Channel |
| 46 | Flange portion |
| 48 | Fixing eye |
| 50 | Gearbox wall |
| 52 | End face |
| 54 | Preload spring |
| 56 | Axial groove |
| 58 | Spring plate |
| 60 | Sealing sleeve |
| 62 | Sealing sleeve foot |
| 64 | Axial groove |
| 66 | Reinforcing sleeve |
| 68 | Snap-lock connection |
| 70 | Inner ring |
| 72 | Outer ring |
| 74 | Roller body |
| 76 | Cage |
| 78 | Sealing disc |
| 80 | Fixing portion |
| 82, 82' | Ring portion |
| 84, 84' | Shoulder portion |
| 86, 86' | Contact face |
| 88 | Cup spring |
| 90 | Spring tongue |
| 92 | Conical face |
| 94, 94' | Bent region |
| 96, 96' | Rounded region |
| 98 | Grease pocket |
| 100 | Shoulder |
| 102 | Securing ring |
| 104 | Collar |
| 106 | Joint chamfer |
| 108 | Run-out region |
| 109 | Longitudinal rib |
| 110 | Interrupted cylinder face |
| 112 | End region |
| 114 | Contact region |
| | |
| d | Inner diameter at supporting ring |
| s | Radial play |
| D | Outer diameter at annular piston |

L   Length at supporting ring
M   Central axis

α   Ramp angle
β   Tilt angle

## Claims

1. Central release unit (10) for a clutch actuation, with a cylinder housing (12) which delimits an annular pressure chamber (14) about a central axis (M); wherein an annular piston (18), which can be actively connected to a clutch via a release bearing (16), is guided displaceably along the central axis (M) in said pressure chamber (14); wherein the release bearing (16) is connected to the annular piston (18) by means of a supporting ring (20, 20'), a sleeve portion (24, 24') of which having a plurality of spring tabs (26, 26') surrounds an end portion (22) of the annular piston (18); wherein a free end (28, 28') of each of said spring tabs is configured to engage in sprung fashion in an assigned depression (30) in the end portion (22) of the annular piston (18), and said tabs are adapted to bring a contact face (32, 32') of the supporting ring (20, 20') to bear against an end face (34) on the end portion (22) of the annular piston (18); wherein

   an outer diameter (D) of the end portion (22) is smaller than an inner diameter (d) of the sleeve portion (24, 24'), so that a defined radial play (s) exists between the supporting ring (20, 20') and the annular piston (18), allowing a tumbling motion of the contact face (32, 32') on the end face (34) of the annular piston (34) about the central axis (M); wherein for the sprung engagement of the spring tabs (26, 26'), the depression (30) of the annular piston (18) comprises a ramp region (36) with a gradient relative to the central axis (M) such that, during said tumbling motion, the spring tabs (26, 26') may slide on the ramp region (36) along the central axis (M) without self-inhibition and hence apply a return force on the supporting ring (20, 20') countering the tumbling motion ,
   **characterised in that** the radial play (s) between the supporting ring (20, 20') and the annular piston (18), and an axial length (L) of the sleeve portion (24, 24') of the supporting ring (20, 20'), are matched to each other such that during the tumbling motion, the supporting ring (20, 20') mounted on the annular piston (18) can be tilted by a tilt angle (β) of maximum 2° relative to the central axis (M).

2. Central release unit (10) according to claim 1, **characterized in that** the gradient of the ramp region (36) on the annular piston (18) is constant with a ramp angle (α) relative to the central axis (M).

3. Central release unit (10) according to claim 2, **characterized in that** the gradient of the ramp region (36) fulfils the following equation:

$$\tan \alpha > \mu_R$$

   where $\mu_R$ is the coefficient of friction between the spring tabs (26, 26') of the supporting ring (20, 20') and the ramp region (36) of the annular piston (18).

4. Central release unit (10) according to claim 2 or 3, **characterized in that** the ramp angle (α) of the ramp region (36) on the ring piston (18) relative to the central axis (M) is greater than or equal to 10° and less than or equal to 15°.

5. Central release unit (10) according to any of the preceding claims, **characterized in that** the supporting ring (20, 20') has at least three and at most nine spring tabs (26, 26').

6. Central release unit (10) according to claim 5, **characterized in that** the supporting ring (20, 20') has six spring tabs (26, 26').

7. Central release unit (10) according to any of the preceding claims, **characterized in that** the spring tabs (26, 26') are evenly distributed over the periphery of the supporting ring (20, 20').

8. Central release unit (10) according to any of the preceding claims, **characterized in that** the end portion (22) of the annular piston (18) has a radially outwardly protruding collar (104) which forms a stop for the spring tabs (26, 26') of the supporting ring (20, 20').

9. Central release unit (10) according to any of the preceding claims, **characterized in that** the sleeve portion (24, 24') of the supporting ring (20, 20') is rounded on the inner periphery at its end facing the pressure chamber (14).

10. Central release unit (10) according to any of the preceding claims, **characterized in that** the ramp region (36) is formed by a peripheral conical face (92) of the annular piston (18) .

11. Central release unit (10) according to any of the preceding claims, **characterized in that** the free ends (28) of the spring tabs (26) face away from the pressure chamber (14).

12. Central release unit (10) according to any of claims 1 to 11, **characterized in that** the free ends (28') of the spring tabs (26') face towards the pressure chamber (14).

13. Central release unit (10) according to any of the preceding claims, **characterized in that** the free ends (28, 28') of the spring tabs (26, 26') are bent away from the annular piston (18) over a curved region (94, 94'), and the curved regions (94, 94') bear against the ramp region (36) of the annular piston (18).

14. Central release unit (10) according to any of the preceding claims, **characterized in that** the cylinder housing (12) and/or the annular piston (18) are/is made from plastic.

**Patentansprüche**

1. Zentralausrücker (10) für eine Kupplungsbetätigung, mit einem Zylindergehäuse (12), das eine ringförmige Druckkammer (14) um eine Mittelachse (M) begrenzt; wobei ein ringförmiger Kolben (18), der über ein Auslöselager (16) aktiv mit einer Kupplung verbunden werden kann, versetzbar entlang der Mittelachse (M) in der Druckkammer (14) geführt wird; wobei das Auslöselager (16) mit dem ringförmigen Kolben (18) über einen Stützring (20, 20') verbunden ist, wobei ein Hülsenteil (24, 24') desselben mit mehreren Federnasen (26, 26') einen Endteil (22) des ringförmigen Kolbens (18) umgibt; wobei ein freies Ende (28, 28') jeder der Federnasen dazu ausgelegt ist, in einer gefederten Weise in einer zugeordneten Vertiefung (30) im Endteil (22) des ringförmigen Kolbens (18) einzugreifen, und wobei die Nasen dazu angepasst sind, eine Kontaktfläche (32, 32') des Stützrings (20, 20') dazu zu bringen, an einer Endfläche (34) am Endteil (22) des ringförmigen Kolben (18) anzuliegen; wobei

ein Außendurchmesser (D) des Endteils (22) kleiner als ein Innendurchmesser (d) des Hülsenteils (24, 24') ist, sodass ein definiertes Radialspiel (s) zwischen dem Stützring (20, 20') und dem ringförmigen Kolben (18) vorhanden ist, das eine Taumelbewegung der Kontaktfläche (32, 32') an der Endfläche (34) des ringförmigen Kolbens (34) um die Mittelachse (M) ermöglicht; wobei, für den gefederten Eingriff der Federnasen (26, 26'), die Vertiefung (30) des ringförmigen Kolbens (18) einen Rampenbereich (36) mit einem Gradienten relativ zur Mittelachse (M) umfasst, sodass, während der Taumelbewegung, die Federnasen (26, 26') auf dem Rampenbereich (36) entlang der Mittelachse (M) ohne Selbstbehinderung gleiten können und daher eine Rückstellkraft auf den Stützring (20, 20') ausüben, die der Taumelbewegung entgegenwirkt,

**dadurch gekennzeichnet, dass** das Radialspiel (s) zwischen dem Stützring (20, 20') und dem ringförmigen Kolben (18) und eine axiale Länge (L) des Hülsenteils (24, 24') des Stützrings (20, 20') aufeinander abgestimmt sind, sodass, während der Taumelbewegung, der an dem ringförmigen Kolben (18) montierte Stützring (20, 20') um einen Neigungswinkel ($\beta$) von maximal 2° relativ zur Mittelachse (M) geneigt werden kann.

2. Zentralausrücker (10) nach Anspruch 1, **dadurch gekennzeichnet, dass** der Gradient des Rampenbereichs (36) am ringförmigen Kolben (18) mit einem Rampenwinkel ($\alpha$) relativ zur Mittelachse (M) konstant ist.

3. Zentralausrücker (10) nach Anspruch 2, **dadurch gekennzeichnet, dass** der Gradient des Rampenbereichs (36) die folgende Gleichung erfüllt:

$$\tan\ \alpha\ >\ \mu_R$$

wobei $\mu_R$ der Reibungskoeffizient zwischen den Federnasen (26, 26') des Stützrings (20, 20') und dem Rampenbereich (36) des ringförmigen Kolbens (18) ist.

4. Zentralausrücker (10) nach Anspruch 2 oder 3, **dadurch gekennzeichnet, dass** der Rampenwinkel ($\alpha$) des Rampenbereichs (36) am Ringkolben (18) relativ zur Mittelachse (M) größer als oder gleich 10° und kleiner als oder gleich 15° ist.

5. Zentralausrücker (10) nach einem der vorhergehenden Ansprüche, **dadurch gekennzeichnet, dass** der Stützring (20, 20') mindestens drei und höchstens neun Federnasen (26, 26') aufweist.

6. Zentralausrücker (10) nach Anspruch 5, **dadurch gekennzeichnet, dass** der Stützring (20, 20') sechs Federnasen (26, 26') aufweist.

7. Zentralausrücker (10) nach einem der vorhergehenden Ansprüche, **dadurch gekennzeichnet, dass** die Federnasen (26, 26') gleichmäßig über den Umfang des Stützrings (20, 20') verteilt sind.

8. Zentralausrücker (10) nach einem der vorhergehenden Ansprüche, **dadurch gekennzeichnet, dass** der Endteil (22) des ringförmigen Kolbens (18) einen radial auswärts herausragenden Einfassungsring (104) aufweist, der einen Anschlag für die Federnasen (26, 26') des Stützrings (20, 20') bildet.

9. Zentralausrücker (10) nach einem der vorhergehenden Ansprüche, **dadurch gekennzeichnet, dass** der Hülsenteil (24, 24') des Stützrings (20, 20') am inneren Umfang an seinem Ende, das zur Druckkammer (14) zeigt, gerundet ist.

10. Zentralausrücker (10) nach einem der vorhergehenden Ansprüche, **dadurch gekennzeichnet, dass** der Rampenbereich (36) durch eine umlaufende konische Fläche (92) des ringförmigen Kolbens (18) gebildet ist.

11. Zentralausrücker (10) nach einem der vorhergehenden Ansprüche, **dadurch gekennzeichnet, dass** die freien Enden (28) der Federnasen (26) von der Druckkammer (14) weg zeigen.

12. Zentralausrücker (10) nach einem der Ansprüche 1 bis 11, **dadurch gekennzeichnet, dass** die freien Enden (28') der Federnasen (26') zur Druckkammer (14) hin zeigen.

13. Zentralausrücker (10) nach einem der vorhergehenden Ansprüche, **dadurch gekennzeichnet, dass** die freien Enden (28, 28') der Federnasen (26, 26') vom ringförmigen Kolben (18) über einem gekrümmten Bereich (94, 94') weg gebogen sind und dass die gekrümmten Bereiche (94, 94') am Rampenbereich (36) des ringförmigen Kolbens (18) anliegen.

14. Zentralausrücker (10) nach einem der vorhergehenden Ansprüche, **dadurch gekennzeichnet, dass** das Zylindergehäuse (12) und/oder der ringförmige Kolben (18) aus Kunststoff gefertigt sind/ist.

## Revendications

1. Unité de débrayage centrale (10) pour un actionnement d'embrayage, avec un logement de cylindre (12) qui délimite une chambre de pression annulaire (14) autour d'un axe central (M) ; dans laquelle un piston annulaire (18), qui peut être activement raccordé à un embrayage par l'intermédiaire d'un palier de débrayage (16), est guidé de façon déplaçable le long de l'axe central (M) dans ladite chambre de pression (14) ; dans laquelle le palier de débrayage (16) est raccordé au piston annulaire (18) au moyen d'une bague de support (20, 20'), dont une partie à manchon (24, 24') ayant une pluralité de pattes à ressort (26, 26') entoure une partie d'extrémité (22) du piston annulaire (18) ; dans laquelle une extrémité libre (28, 28') de chacune desdites pattes à ressort est configurée pour s'engager de façon élastique dans un creux attribué (30) dans la partie d'extrémité (22) du piston annulaire (18), et lesdites pattes sont adaptées pour faire en sorte qu'une face de contact (32, 32') de la bague de support (20, 20') prenne appui contre une face d'extrémité (34) sur la partie d'extrémité (22) du piston annulaire (18) ; dans laquelle

un diamètre extérieur (D) de la partie d'extrémité (22) est inférieur à un diamètre intérieur (d) de la partie à manchon (24, 24'), pour qu'un jeu radial défini (s) existe entre la bague de support (20, 20') et le piston annulaire (18), permettant un mouvement tournant de la face de contact (32, 32') sur la face d'extrémité (34) du piston annulaire (34) autour de l'axe central (M) ; dans laquelle, pour l'engagement élastique des pattes à ressort (26, 26'), le creux (30) du piston annulaire (18) comprend une région de rampe (36) avec un gradient relativement à l'axe central (M) de telle sorte que, durant ledit mouvement tournant, les pattes à ressort (26, 26') puissent coulisser sur la région de rampe (36) le long de l'axe central (M) sans auto-prévention et donc appliquer une force de rappel sur la bague de support (20, 20') contrant le mouvement tournant,
**caractérisé en ce que** le jeu radial (s) entre la bague de support (20, 20') et le piston annulaire (18), et une longueur axiale (L) de la partie à manchon (24, 24') de la bague de support (20, 20') sont assortis l'un à l'autre de telle sorte que, durant le mouvement tournant, la bague de support (20, 20') montée sur le piston annulaire (18) puisse être inclinée selon un angle d'inclinaison (β) de 2° au maximum relativement à l'axe central (M).

2. Unité de débrayage centrale (10) selon la revendication 1, **caractérisée en ce que** le gradient de la région de rampe (36) sur le piston annulaire (18) est constant avec un angle de rampe (α) relativement à l'axe central (M).

3. Unité de débrayage centrale (10) selon la revendication 2, **caractérisée en ce que** le gradient de la région de rampe (36) satisfait à l'équation suivante :

$$\tan \alpha > \mu_R$$

où $\mu_R$ est le coefficient de friction entre les pattes à ressort (26, 26') de la bague de support (20, 20') et la région de rampe (36) du piston annulaire (18).

4. Unité de débrayage centrale (10) selon la revendication 2 ou 3, **caractérisée en ce que** l'angle de rampe (α) de la région de rampe (36) sur le piston annulaire (18) relativement à l'axe central (M) est supérieur ou égal à 10° et inférieur ou égal à 15°.

5. Unité de débrayage centrale (10) selon l'une quelconque des revendications précédentes, **caractéri-**

**sée en ce que** la bague de support (20, 20') a au moins trois et au plus neuf pattes à ressort (26, 26').

6.  Unité de débrayage centrale (10) selon la revendication 5, **caractérisée en ce que** la bague de support (20, 20') a six pattes à ressort (26, 26').

7.  Unité de débrayage centrale (10) selon l'une quelconque des revendications précédentes, **caractérisée en ce que** les pattes à ressort (26, 26') sont uniformément distribuées sur la périphérie de la bague de support (20, 20').

8.  Unité de débrayage centrale (10) selon l'une quelconque des revendications précédentes, **caractérisée en ce que** la partie d'extrémité (22) du piston annulaire (18) a un collier (104), faisant saillie radialement vers l'extérieur, qui forme une butée pour les pattes à ressort (26, 26') de la bague de support (20, 20').

9.  Unité de débrayage centrale (10) selon l'une quelconque des revendications précédentes, **caractérisée en ce que** la partie à manchon (24, 24') de la bague de support (20, 20') est arrondie sur la périphérie intérieure à son extrémité faisant face à la chambre de pression (14).

10. Unité de débrayage centrale (10) selon l'une quelconque des revendications précédentes, **caractérisée en ce que** la région de rampe (36) est formée par une face conique périphérique (92) du piston annulaire (18).

11. Unité de débrayage centrale (10) selon l'une quelconque des revendications précédentes, **caractérisée en ce que** les extrémités libres (28) des pattes à ressort (26) font face à l'opposé de la chambre de pression (14).

12. Unité de débrayage centrale (10) selon l'une quelconque des revendications 1 à 11, **caractérisée en ce que** les extrémités libres (28') des pattes à ressort (26') sont tournées vers la chambre de pression (14).

13. Unité de débrayage centrale (10) selon l'une quelconque des revendications précédentes, **caractérisée en ce que** les extrémités libres (28, 28') des pattes à ressort (26, 26') sont fléchies à l'opposé du piston annulaire (18) sur une région courbée (94, 94'), et les régions courbées (94, 94') prennent appui contre la région de rampe (36) du piston annulaire (18).

14. Unité de débrayage centrale (10) selon l'une quelconque des revendications précédentes, **caractérisée en ce que** le logement de cylindre (12) et/ou le piston annulaire (18) sont/est fait(s) de plastique.

EP 3 587 848 B1

FIG. 1　　FIG. 2

FIG. 3

FIG. 4

15

FIG. 5

FIG. 6

FIG. 7

FIG. 8

EP 3 587 848 B1

FIG. 9

FIG. 10

FIG. 11

FIG. 12

FIG. 13

FIG. 14

FIG. 15

17

**FIG. 16**

**FIG. 17**

**FIG. 19**

**FIG. 18**

**FIG. 20**

**FIG. 21**

**FIG. 22**

**FIG. 23**

## REFERENCES CITED IN THE DESCRIPTION

**Patent documents cited in the description**

- EP 1464862 A2
- DE 19912432 A1
- DE 10114844 A1
- DE 102013203016 A1
- DE 102009018794 A1
- DE 102016219592 A1